# EUROPÄISCHE PATENTSCHRIFT

(11) **EP 3 304 807 B1**
(45) Veröffentlichungstag und Bekanntmachung des Hinweises auf die Patenterteilung: **13.10.2021**
(21) Anmeldenummer: 16723110.9
(22) Anmeldetag: 17.05.2016
(51) Int. Cl.: H04L 9/32, H04L 29/06, G06Q 20/40

(54) **IDENTIFIKATION EINER PERSON AUF DER BASIS EINES TRANSFORMIERTEN BIOMETRISCHEN REFERENZMERKMALS**
IDENTIFYING A PERSON ON THE BASIS OF A TRANSFORMED BIOMETRIC REFERENCE FEATURE
IDENTIFICATION D'UNE PERSONNE SUR LA BASE D'UNE CARACTÉRISTIQUE DE RÉFÉRENCE BIOMÉTRIQUE TRANSFORMÉE

(30) Priorität: 27.05.2015 DE 102015108346
(43) Veröffentlichungstag der Anmeldung: 11.04.2018
(73) Patentinhaber: Bundesdruckerei GmbH, 10969 Berlin (DE)
(72) Erfinder: WOLF, Andreas, 13158 Berlin (DE); PAESCHKE, Manfred, 16348 Wandlitz (DE); FRITZE, Frank, 12437 Berlin (DE)
(74) Vertreter: Patentship Patentanwaltsgesellschaft mbH
(86) Internationale Anmeldenummer: PCT/EP2016/060971
(87) Internationale Veröffentlichungsnummer: WO 2016/188792

(56) Entgegenhaltungen:
- WO-A2-02/095657
- US-A1- 2010 205 660
- US-A1- 2014 095 884
- RUSSELL ANG ET AL: "Cancelable Key-Based Fingerprint Templates", 30 June 2005 (2005-06-30), INFORMATION SECURITY AND PRIVACY; [LECTURE NOTES IN COMPUTER SCIENCE;;LNCS], SPRINGER-VERLAG, BERLIN/HEIDELBERG, PAGE(S) 242 - 252, XP019011690, ISBN: 978-3-540-26547-4

## Beschreibung

Die vorliegende Erfindung betrifft das Gebiet der Identifikation einer Person.

Die Offenlegungsschrift US 2014/095884 A1 offenbart ein biometrisches Authentifizierungssystem, welches Teil einer Computervorrichtung ist. Die Computervorrichtung umfasst unter anderem biometrische Sensoren zum Erfassen eines biometrischen Merkmals eines Nutzers.

Die Offenlegungsschrift US 2010/205660 A1 offenbart ein System, ein Verfahren und ein Computerprogrammprodukt zum Erzeugen eines widerrufbaren/löschbaren biometrischen Referenz-Templates.

Die Offenlegungsschrift WO 02/095657 A2 offenbart Techniken zum Transformieren eines biometrischen Templates.

Die Druckschrift "RUSSELL ANG ET AL: "Cancelable Key-Based Fingerprint Templates", 30. Juni 2005 (2005-06-30), INFORMATION SECURITY AND PRIVACY; [LECTURE NOTES IN COMPUTER SCIENCE;;LNCS], SPRINGER-VERLAG, BERLIN/HEIDELBERG, PAGE(S) 242 - 252, ISBN: 978-3-540-26547-4" offenbart ein Verfahren zum Identifizieren einer Person.

Zur Identifikation einer Person wird häufig ein biometrisches Merkmal der Person erfasst und an einen Identifikationsserver übermittelt. Hierbei vergleicht der Identifikationsserver ansprechend auf Empfangen des biometrischen Merkmals der Person das empfangene biometrische Merkmal der Person mit einem biometrischen Referenzmerkmal der Person, um die Person zu identifizieren. Beispielsweise wird das biometrische Referenzmerkmal der Person bei einer Beantragung eines Passes oder eines Personalausweises durch die Person in einer vertrauenswürdigen Umgebung, wie einem Passamt, erfasst sowie die Identität der Person festgestellt und wird das erfasste biometrische Referenzmerkmal der Person gemeinsam mit Daten bezüglich der festgestellten Identität an den Identifikationsserver übermittelt.

Hierbei ist jedoch häufig ein Widerrufen oder eine Revozierung des übermittelten biometrischen Referenzmerkmals durch die Person nicht vorgesehen. Hierdurch kann mittels des Identifikationsserver ohne Zustimmung und/oder ohne Wissen der Person ein Datenprofil zu der Person erstellt werden. Ferner kann die Person ohne ihre Zustimmung und/oder ohne ihr Wissen mittels des Identifikationsservers identifiziert werden. Hierdurch kann ferner ein Datenschutz bei der Identifikation der Person reduziert sein.

Es ist daher die Aufgabe der vorliegenden Erfindung, ein Konzept zur Identifikation einer Person mit einem verbesserten Datenschutz zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung einen Identifikationsserver zur Identifikation einer zu identifizierenden Person auf der Basis eines transformierten biometrischen Referenzmerkmals, welches der zu identifizierenden Person zugeordnet ist, mit: einem Speicher, in welchem eine Transformationsvorschrift gespeichert ist; einer Kommunikationsschnittstelle, welche ausgebildet ist, eine Aufforderung zur Übermittlung eines biometrischen Merkmals der zu identifizierenden Person sowie eines Transformationsschlüssels über das Kommunikationsnetzwerk auszusenden, und welche ausgebildet ist, das biometrische Merkmal der zu identifizierenden Person sowie den Transformationsschlüssel über das Kommunikationsnetzwerk zu empfangen; und einem Prozessor, welcher ausgebildet ist, das empfangene biometrische Merkmal der zu identifizierenden Person mittels der Transformationsvorschrift und des empfangenen Transformationsschlüssels in ein transformiertes biometrisches Merkmal für eine Identifikation auf der Basis des transformierten biometrischen Referenzmerkmals zu transformieren. Dadurch wird der Vorteil erreicht, dass die zu identifizierende Person nur bei Kenntnis oder Bekanntgabe des Transformationsschlüssels identifiziert werden kann, wodurch ein Datenschutz bei der Identifikation der zu identifizierenden Person erhöht werden kann.

Der Identifikationsserver kann ein Computer sein, auf welchem ein elektronischer Identifikationsdienst ausgeführt wird.

Die Transformationsvorschrift kann eine asymmetrische Verschlüsselung, eine digitale Signierung, eine digitale Codierungsvorschrift, eine Scrambling-Vorschrift, eine digitale Modulationsvorschrift oder eine Template Protection Transformationsvorschrift sein. Ferner kann der Transformationsschlüssel ein der zu identifizierenden Person zugeordnetes Datum, ein einem Dienstanbieter zugeordnetes Datum, ein Passwort, einen kryptographischen Schlüssel, einen kryptographischen Signaturschlüssel und/oder ein digitales Zertifikat umfassen.

Das transformierte biometrische Referenzmerkmal kann aus einem biometrischen Referenzmerkmal der zu identifizierenden Person mittels der Transformationsvorschrift und des Transformationsschlüssels erzeugt werden. Hierbei kann das biometrische Referenzmerkmal ein Fingerabdruck, ein Handvenenmuster, ein Stimmmuster, ein Gesichtsbild oder eine Irisabbild eines Auges der zu identifizierenden Person sein. Beispielsweise wird das biometrische Referenzmerkmal der zu identifizierbaren Person in einer betraubaren Umgebung, wie in einer Geschäftsstelle eines Betreibers des Identifikationsservers oder in einem Passamt in einem Bürgerbüro, erfasst. Im Anschluss an das Erfassen kann das erfasste biometrische Referenzmerkmal mittels der Transformationsvorschrift und des Transformationsschlüssels transformiert werden und kann das transformierte biometrische Referenzmerkmal an den Identifikationsserver oder an einen Dienstserver eines Dienstanbieters übermittelt werden. Ferner kann das erfasste biometrische Referenzmerkmal im Anschluss an das Erfassen mittels der Transformationsvorschrift und des Transformationsschlüssels transformiert, das transformierte biometrische Referenzmerkmal in einem der zu identifizierenden Person zugeordneten Speicherelement, wie einer Smartcard, gespeichert und das gespeicherte transformierte biometrische Referenzmerkmal zu einem späteren Zeitpunkt an den Identifikationsserver oder an den Dienstserver des Dienstanbieters übermittelt werden. Beispielsweise wird das übermittelte transformierte biometrische Referenzmerkmal in dem Speicher des Identifikationsservers oder in einem Speicher des Dienstservers gespeichert.

Das biometrische Merkmal kann ein mittels einer Identifikationsvorrichtung erfasstes biometrisches Merkmal, wie ein Fingerabdruck, ein Handvenenmuster, ein Stimmmuster, ein Gesichtsbild oder eine Irisabbild eines Auges der zu identifizierenden Person sein.

Die Kommunikationsschnittstelle kann eine Local Area Network (LAN) Kommunikationsschnittstelle oder eine Wireless Local Area Network (W-LAN) Kommunikationsschnittstelle umfassen. Ferner kann die Kommunikationsschnittstelle zur verschlüsselten Kommunikation gemäß dem Standard Secure Sockets Layer / Transport Layer Security (SSL/TLS) ausgebildet sein. Die Kommunikationsschnittstelle kann ferner zur digitalen Signierung von zu übermittelnden Daten ausgebildet sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die zu identifizierende Person kann ein Benutzerkonto bei einem Dienstanbieter, wie einem Internetshop-Dienstanbieter oder einem Onlinebanking-Dienstanbieter, besitzen. Um ihre Identität gegenüber dem Dienstanbieter nachweisen zu können, kann die zu identifizierende Person in dem Benutzerkonto Zugangsdaten oder Credentials für die Identifikation mittels des Identifikationsservers hinterlegen. Um die zu identifizierende Person zu identifizieren kann ein Dienstserver des Dienstanbieters gegenüber dem Identifikationsserver eine Identifikation oder eine Identitätsprüfung der zu identifizierenden Person begehren. Hierzu übermittelt der Dienstserver dem Identifikationsserver eine Personenkennung. Ferner kann der Dienstserver seinen Anspruch auf die Identifikation der zu identifizierenden Person gegenüber dem Identifikationsserver mittels der Credentials nachweisen. Daraufhin kann die Kommunikationsschnittstelle die Aufforderung zur Übermittlung des biometrischen Merkmals der zu identifizierenden Person sowie des Transformationsschlüssels über das Kommunikationsnetzwerk an die zu identifizierende Person oder an eine der zu identifizierenden Person zugeordneten Identifikationsvorrichtung aussenden. Die zu identifizierende Person kann daraufhin, beispielsweise mittels der der zu identifizierenden Person zugeordneten Identifikationsvorrichtung, das biometrische Merkmal sowie den Transformationsschlüssel an die Kommunikationsschnittstelle des Identifikationsservers über das Kommunikationsnetzwerk übermitteln. Der Prozessor kann anschließend das empfangene biometrische Merkmal mittels der Transformationsvorschrift und des empfangenen Transformationsschlüssels in das transformierte biometrische Merkmal transformieren.

Gemäß einer Ausführungsform sind das transformierte biometrische Referenzmerkmal und das transformierte biometrische Merkmal der zu identifizierenden Person unterschiedlich.

Gemäß einer weiteren Ausführungsform sind das transformierte biometrische Merkmal und das nichttransformierte biometrische Merkmal der zu identifizierenden Person unterschiedlich.

Gemäß einer weiteren Ausführungsform sind das transformierte biometrische Referenzmerkmal und das nichttransformierte biometrische Referenzmerkmal der zu identifizierenden Person unterschiedlich.

Gemäß einer weiteren Ausführungsform, welche nicht erfindungsgemäß ist und lediglich der Veranschaulichung dient, ist der Prozessor ferner ausgebildet, das erzeugte transformierte biometrische Merkmal mit dem transformierten biometrischen Referenzmerkmal zu vergleichen, um die zu identifizierenden Person zu identifizieren. Dadurch wird der Vorteil erreicht, dass die zu identifizierende Person effizient identifiziert werden kann.

Der Prozessor kann ferner ausgebildet sein, basierend auf dem Vergleich des transformierten biometrischen Merkmals mit dem transformierten biometrischen Referenzmerkmals ein Vergleichsmaß zu bestimmen. Erreicht oder überschreitet das Vergleichsmaß einen vorbestimmten Schwellwert, so kann die zu identifizierende Person als die Person identifiziert werden, der das transformierte biometrische Referenzmerkmal zugeordnet ist. Ferner kann der Identifikationsserver ausgebildet sein, ein Ergebnis des Vergleichs an den Dienstserver, beispielsweise mittels der Kommunikationsschnittstelle über das Kommunikationsnetzwerk, zu übermitteln. Beispielsweise bestätigt der Identifikationsserver dem Dienstserver die Identität der zu identifizierenden Person. Um eine zukünftige Identifikation der zu identifizierenden Person zu verhindern, kann die zu identifizierende Person den Transformationsschlüssel, beispielsweise aus einem Speicher der der zu identifizierenden Person zugeordneten Identifikationsvorrichtung, löschen oder überschreiben. Ferner kann die zu identifizierende Person die Herausgabe des Transformationsschlüssels verweigern, um eine zukünftige Identifikation der zu identifizierenden Person zu verhindern. Hierdurch kann eine Revozierung des transformierten biometrischen Referenzmerkmals erreicht werden.

Erfindungsgemäß ist die Kommunikationsschnittstelle ferner ausgebildet, das erzeugte transformierte biometrische Merkmal über das Kommunikationsnetzwerk an einen Dienstserver eines Dienstanbieters für einen Vergleich des transformierten biometrischen Merkmals mit dem transformierten biometrischen Referenzmerkmal auszusenden. Dadurch wird der Vorteil erreicht, dass der Vergleich des transformierten biometrischen Merkmals mit dem transformierten biometrischen Referenzmerkmal von dem Identifikationsserver ausgelagert werden kann, wodurch ein für einen Betrieb des Identifikationsservers benötigter Speicherbedarf und eine für den Betrieb des Identifikationsservers benötigte Rechenkapazität reduziert werden kann. Hierdurch kann ferner eine Kostenreduktion beim Bereitstellen des Identifikationsservers erreicht werden.

Gemäß einer weiteren Ausführungsform ist die Transformationsvorschrift eine der folgenden Transformationsvorschriften: asymmetrische Verschlüsselung unter Verwendung eines kryptografischen Schlüssels, digitale Signierung unter Verwendung eines kryptographischen Signaturschlüssels, eine digitale Codierungsvorschrift, insbesondere ein digitaler Code, wie ein RS-Code oder ein Huffmann-Code, eine Scrambling-Vorschrift, eine digitale Modulationsvorschrift oder eine Template Protection Transformationsvorschrift. Dadurch wird der Vorteil erreicht, dass eine Rückgewinnung des biometrischen Merkmals aus dem transformierten biometrischen Merkmal verhindert werden kann, um den Datenschutz weiter zu erhöhen.

Die asymmetrische Verschlüsselung kann unter Verwendung eines Public-Key-Verschlüsselungsverfahrens durchgeführt werden. Ferner kann der RS-Code ein Reed-Solomon-Code sein. Die Template Protection Transformationsvorschrift kann ferner eine Biometric Template Protection Transformationsvorschrift gemäß dem Standard ISO 24745 sein.

Gemäß einer weiteren Ausführungsform umfasst der Transformationsschlüssel ein der zu identifizierenden Person zugeordnetes Datum, ein einem Dienstanbieter zugeordnetes Datum, ein Passwort, einen kryptographischen Schlüssel, einen kryptographischen Signaturschlüssel oder ein digitales Zertifikat. Dadurch wird der Vorteil erreicht, dass das biometrische Merkmal effizient transformiert werden kann.

Erfindungsgemäß ist die Kommunikationsschnittstelle ferner ausgebildet, eine Personenkennung über das Kommunikationsnetzwerk zu empfangen, wobei die Personenkennung der zu identifizierenden Person zugeordnet ist, und ist die Kommunikationsschnittstelle ferner ausgebildet, ansprechend auf Empfangen der Personenkennung die Aufforderung zur Übermittlung eines biometrischen Merkmals der zu identifizierenden Person sowie eines Transformationsschlüssels über das Kommunikationsnetzwerk auszusenden. Dadurch wird der Vorteil erreicht, dass mittels des Identifikationsservers eine Mehrzahl von Personen identifiziert werden kann.

Die Personenkennung kann ein Personendatum, wie ein Name oder ein Vorname, oder ein Benutzername der zu identifizierenden Person sein. Ferner kann der Prozessor oder die Kommunikationsschnittstelle ausgebildet sein, auf der Basis der empfangenen Personenkennung eine der zu identifizierenden Person zugeordneten Identifikationsvorrichtung oder deren Netzwerkadresse zu bestimmen, um eine Übermittlung der Aufforderung an die der zu identifizierenden Person zugeordnete Identifikationsvorrichtung zu ermöglichen.

Gemäß einer weiteren Ausführungsform ist in dem Speicher ferner eine Mehrzahl von transformierten biometrischen Referenzmerkmalen vorgespeichert, welche unterschiedlichen Personen zugeordnet sind; ist der Prozessor ferner ausgebildet, anhand der empfangenen Personenkennung ein transformiertes biometrisches Referenzmerkmal, welches der zu identifizierenden Person zugeordnet ist, aus dem Speicher auszulesen; und ist der Prozessor ferner ausgebildet, das transformierte biometrische Merkmal mit dem ausgelesenen transformierten biometrischen Referenzmerkmal zu vergleichen, um die zu identifizierenden Person zu identifizieren. Dadurch wird der Vorteil erreicht, dass mehrere Personen effizient identifiziert werden können. Beispielsweise beträgt die Mehrzahl 2, 3, 4, 5, 10, 20, 230, 40, 50, 100, 250, 500, 750, 1000, 5000, 10000, 50000, 100000, 500000, 1000000, 5000000 oder 10000000.

Gemäß einer weiteren Ausführungsform ist die Kommunikationsschnittstelle ferner ausgebildet, eine Dienstanbieterkennung über das Kommunikationsnetzwerk zu empfangen, wobei die Dienstanbieterkennung einem Dienstanbieter zugeordnet ist, ist der Prozessor ferner ausgebildet, auf der Basis der empfangenen Dienstanbieterkennung einen Hinweis auf den Dienstanbieter zu bestimmen, und ist die Kommunikationsschnittstelle ferner ausgebildet, den Hinweis auf den Dienstanbieter gemeinsam mit der Aufforderung zur Übermittlung eines biometrischen Merkmals der zu identifizierenden Person sowie eines Transformationsschlüssels über das Kommunikationsnetzwerk auszusenden. Dadurch wird der Vorteil erreicht, dass die zu identifizierende Person dienstanbieterspezifisch identifiziert werden kann.

Gemäß einer weiteren Ausführungsform ist in dem Speicher eine Mehrzahl von transformierten biometrischen Referenzmerkmalen vorgespeichert, welche unterschiedlichen Personen und/oder Dienstanbietern zugeordnet sind, ist der Prozessor ferner ausgebildet, anhand der empfangenen Personenkennung und/oder der empfangenen Dienstanbieterkennung ein transformiertes biometrisches Referenzmerkmal, welches der zu identifizierenden Person und/oder dem Dienstanbieter zugeordnet ist, aus dem Speicher auszulesen, und ist der Prozessor ferner ausgebildet, das erzeugte transformierte biometrische Merkmal mit dem ausgelesenen transformierten biometrischen Referenzmerkmal zu vergleichen, um die zu identifizierenden Person zu identifizieren. Dadurch wird der Vorteil erreicht, dass mehrere Personen dienstanbieterspezifisch identifiziert werden können.

Gemäß einer weiteren Ausführungsform ist der Identifikationsserver ein eID-Server. Der eID-Server kann ein Server zur elektronischen Identifizierung sein.

Gemäß einem zweiten Aspekt betrifft die Erfindung ein Verfahren zur Identifikation einer zu identifizierenden Person auf der Basis eines transformierten biometrischen Referenzmerkmals, welches der zu identifizierenden Person zugeordnet ist, mittels eines Identifikationsservers, mit: Aussenden einer Aufforderung zur Übermittlung eines biometrischen Merkmals der zu identifizierenden Person sowie eines Transformationsschlüssels über das Kommunikationsnetzwerk durch den Identifikationsserver; Empfangen des biometrischen Merkmals der zu identifizierenden Person sowie des Transformationsschlüssels über das Kommunikationsnetzwerk durch den Identifikationsserver; und Transformieren des empfangenen biometrischen Merkmals der zu identifizierenden Person mittels der Transformationsvorschrift und des empfangenen Transformationsschlüssels in ein transformiertes biometrisches Merkmal für eine Identifikation auf der Basis des transformierten biometrischen Referenzmerkmals durch den Identifikationsserver. Dadurch wird der Vorteil erreicht, dass die zu identifizierende Person nur bei Kenntnis oder Bekanntgabe des Transformationsschlüssels identifiziert werden kann, wodurch ein Datenschutz bei der Identifikation der zu identifizierenden Person erhöht werden kann.

Das Verfahren kann mittels des erfindungsgemäßen Identifikationsservers durchgeführt werden. Weitere Merkmale des Verfahrens ergeben sich unmittelbar aus der Funktionalität des erfindungsgemäßen Identifikationsservers.

Erfindungsgemäß umfasst das Verfahren ferner den Verfahrensschritt: Aussenden des erzeugten transformierten biometrischen Merkmals durch den Identifikationsserver über das Kommunikationsnetzwerk an einen Dienstserver eines Dienstanbieters für einen Vergleich des transformierten biometrischen Merkmals mit dem transformierten biometrischen Referenzmerkmal. Dadurch wird der Vorteil erreicht, dass der Vergleich des transformierten biometrischen Merkmals mit dem transformierten biometrischen Referenzmerkmal von dem Identifikationsserver ausgelagert werden kann, wodurch ein für einen Betrieb des Identifikationsservers benötigter Speicherbedarf und eine für den Betrieb des Identifikationsservers benötigte Rechenkapazität reduziert werden kann. Hierdurch kann ferner eine Kostenreduktion beim Bereitstellen des Identifikationsservers erreicht werden.

Gemäß einer weiteren Ausführungsform ist die Transformationsvorschrift eine der folgenden Transformationsvorschriften: asymmetrische Verschlüsselung unter Verwendung eines kryptografischen Schlüssels, digitale Signierung unter Verwendung eines kryptographischen Signaturschlüssels, eine digitale Codierungsvorschrift, insbesondere ein digitaler Code, wie ein RS-Code oder ein Huffmann-Code, eine Scrambling-Vorschrift, eine digitale Modulationsvorschrift oder eine Template Protection Transformationsvorschrift. Dadurch wird der Vorteil erreicht, dass eine Rückgewinnung des biometrischen Merkmals aus dem transformierten biometrischen Merkmal verhindert werden kann, um den Datenschutz weiter zu erhöhen.

Die asymmetrische Verschlüsselung kann unter Verwendung eines Public-Key-Verschlüsselungsverfahrens durchgeführt werden. Ferner kann der RS-Code ein Reed-Solomon-Code sein. Die Template Protection Transformationsvorschrift kann ferner eine Biometric Template Protection Transformationsvorschrift gemäß dem Standard ISO 24745 sein.

Gemäß einer weiteren Ausführungsform umfasst der Transformationsschlüssel ein der zu identifizierenden Person zugeordnetes Datum, ein einem Dienstanbieter zugeordnetes Datum, ein Passwort, einen kryptographischen Schlüssel, einen kryptographischen Signaturschlüssel oder ein digitales Zertifikat. Dadurch wird der Vorteil erreicht, dass das biometrische Merkmal effizient transformiert werden kann.

Erfindungsgemäß umfasst das Verfahren ferner die Verfahrensschritte: Empfangen einer Personenkennung über das Kommunikationsnetzwerk durch den Identifikationsserver, wobei die Personenkennung der zu identifizierenden Person zugeordnet ist; und ansprechend auf Empfangen der Personenkennung Aussenden der Aufforderung zur Übermittlung eines biometrischen Merkmals der zu identifizierenden Person sowie eines Transformationsschlüssels über das Kommunikationsnetzwerk durch den Identifikationsserver. Dadurch wird der Vorteil erreicht, dass mittels des Verfahrens mehrere Personen identifiziert werden können. Die Personenkennung kann ein Personendatum, wie ein Name oder ein Vorname, oder ein Benutzername der zu identifizierenden Person sein.

Gemäß einer weiteren Ausführungsform umfasst das Verfahren ferner die Verfahrensschritte: Empfangen einer Dienstanbieterkennung über das Kommunikationsnetzwerk durch den Identifikationsserver, wobei die Dienstanbieterkennung einem Dienstanbieter zugeordnet ist; Bestimmen eines Hinweises auf den Dienstanbieter auf der Basis der empfangenen Dienstanbieterkennung durch den Identifikationsserver; und gemeinsames Aussenden des Hinweises auf den Dienstanbieter mit der Aufforderung zur Übermittlung eines biometrischen Merkmals der zu identifizierenden Person sowie eines Transformationsschlüssels über das Kommunikationsnetzwerk durch den Identifikationsserver. Dadurch wird der Vorteil erreicht, dass die Person dienstanbieterspezifisch identifiziert werden kann.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: eine schematische Darstellung eines Identifikationsservers;
- Fig. 2: eine schematische Darstellung einer nicht beanspruchten Identifikationsvorrichtung
- Fig. 3: eine schematische Darstellung eines Verfahrens zur Identifikation einer zu identifizierenden Person mittels des Identifikationsservers; und
- Fig. 4: eine schematische Darstellung eines nicht beanspruchten Verfahrens zur Identifizierung einer zu identifizierenden Person mittels der Identifikationsvorrichtung.

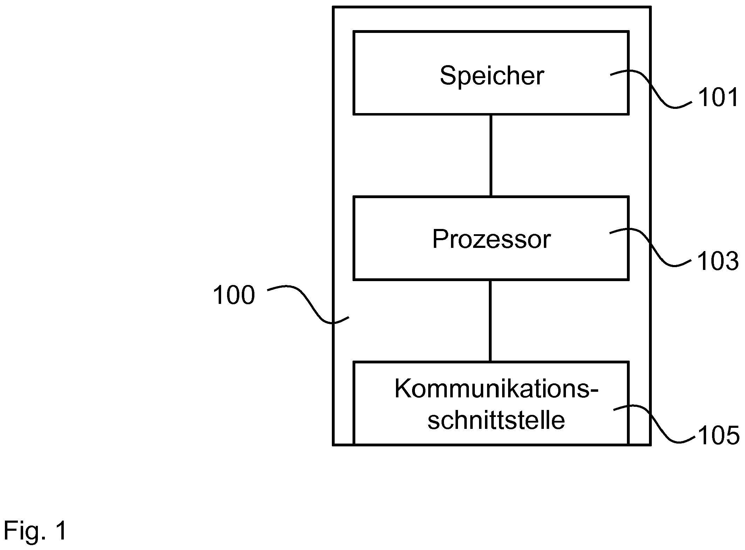

Fig. 1 zeigt eine schematische Darstellung eines Identifikationsservers 100. Der Identifikationsserver 100 umfasst einen Speicher 101, einen Prozessor 103 und eine Kommunikationsschnittstelle 105, wobei der Prozessor 103 mit dem Speicher 101 und der Kommunikationsschnittstelle 105 verbunden ist.

Der Identifikationsserver 100 zur Identifikation einer zu identifizierenden Person auf der Basis eines transformierten biometrischen Referenzmerkmals, welches der zu identifizierenden Person zugeordnet ist, ist ausgebildet mit: dem Speicher 101, in welchem eine Transformationsvorschrift gespeichert ist; der Kommunikationsschnittstelle 105, welche ausgebildet ist, eine Aufforderung zur Übermittlung eines biometrischen Merkmals der zu identifizierenden Person sowie eines Transformationsschlüssels über das Kommunikationsnetzwerk auszusenden, und welche ausgebildet ist, das biometrische Merkmal der zu identifizierenden Person sowie den Transformationsschlüssel über das Kommunikationsnetzwerk zu empfangen; und dem Prozessor 103, welcher ausgebildet ist, das empfangene biometrische Merkmal der zu identifizierenden Person mittels der Transformationsvorschrift und des empfangenen Transformationsschlüssels in ein transformiertes biometrisches Merkmal für eine Identifikation auf der Basis des transformierten biometrischen Referenzmerkmals zu transformieren.

Der Identifikationsserver 100 kann ein Computer sein, auf welchem ein elektronischer Identifikationsdienst ausgeführt wird.

Die Transformationsvorschrift kann eine asymmetrische Verschlüsselung, eine digitale Signierung, eine digitale Codierungsvorschrift, eine Scrambling-Vorschrift, eine digitale Modulationsvorschrift oder eine Template Protection Transformationsvorschrift sein. Ferner kann der Transformationsschlüssel ein der zu identifizierenden Person zugeordnetes Datum, ein einem Dienstanbieter zugeordnetes Datum, ein Passwort, einen kryptographischen Schlüssel, einen kryptographischen Signaturschlüssel und/oder ein digitales Zertifikat umfassen.

Das transformierte biometrische Referenzmerkmal kann aus einem biometrischen Referenzmerkmal der zu identifizierenden Person mittels der Transformationsvorschrift und des Transformationsschlüssels erzeugt werden. Hierbei kann das biometrische Referenzmerkmal ein Fingerabdruck, ein Handvenenmuster, ein Stimmmuster, ein Gesichtsbild oder eine Irisabbild eines Auges der zu identifizierenden Person sein. Beispielsweise wird das biometrische Referenzmerkmal der zu identifizierbaren Person in einer betraubaren Umgebung, wie in einer Geschäftsstelle eines Betreibers des Identifikationsservers 100 oder in einem Passamt in einem Bürgerbüro, erfasst. Im Anschluss an das Erfassen kann das erfasste biometrische Referenzmerkmal mittels der Transformationsvorschrift und des Transformationsschlüssels transformiert werden und kann das transformierte biometrische Referenzmerkmal an den Identifikationsserver 100 oder an einen Dienstserver eines Dienstanbieters übermittelt werden. Ferner kann das erfasste biometrische Referenzmerkmal im Anschluss an das Erfassen mittels der Transformationsvorschrift und des Transformationsschlüssels transformiert, das transformierte biometrische Referenzmerkmal in einem der zu identifizierenden Person zugeordneten Speicherelement, wie einer Smartcard, gespeichert und das gespeicherte transformierte biometrische Referenzmerkmal zu einem späteren Zeitpunkt an den Identifikationsserver 100 oder an den Dienstserver des Dienstanbieters übermittelt werden. Beispielsweise wird das übermittelte transformierte biometrische Referenzmerkmal in dem Speicher 101 des Identifikationsservers 100 oder in einem Speicher des Dienstservers gespeichert.

Das biometrische Merkmal kann ein mittels einer Identifikationsvorrichtung erfasstes biometrisches Merkmal, wie ein Fingerabdruck, ein Handvenenmuster, ein Stimmmuster, ein Gesichtsbild oder eine Irisabbild eines Auges der zu identifizierenden Person sein.

Die Kommunikationsschnittstelle 105 kann eine Local Area Network (LAN) Kommunikationsschnittstelle oder eine Wireless Local Area Network (W-LAN) Kommunikationsschnittstelle umfassen. Ferner kann die Kommunikationsschnittstelle 105 zur verschlüsselten Kommunikation gemäß dem Standard Secure Sockets Layer / Transport Layer Security (SSL/TLS) ausgebildet sein. Die Kommunikationsschnittstelle 105 kann ferner zur digitalen Signierung von zu übermittelnden Daten ausgebildet sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die zu identifizierende Person kann ein Benutzerkonto bei einem Dienstanbieter, wie einem Internetshop-Dienstanbieter oder einem Onlinebanking-Dienstanbieter, besitzen. Um ihre Identität gegenüber dem Dienstanbieter nachweisen zu können, kann die zu identifizierende Person in dem Benutzerkonto Zugangsdaten oder Credentials für die Identifikation mittels des Identifikationsservers 100 hinterlegen. Um die zu identifizierende Person zu identifizieren kann ein Dienstserver des Dienstanbieters gegenüber dem Identifikationsserver 100 eine Identifikation oder eine Identitätsprüfung der zu identifizierenden Person begehren. Hierzu übermittelt der Dienstserver dem Identifikationsserver 100 eine Personenkennung. Ferner kann der Dienstserver seinen Anspruch auf die Identifikation der zu identifizierenden Person gegenüber dem Identifikationsserver 100 mittels der Credentials nachweisen. Daraufhin kann die Kommunikationsschnittstelle 105 die Aufforderung zur Übermittlung des biometrischen Merkmals der zu identifizierenden Person sowie des Transformationsschlüssels über das Kommunikationsnetzwerk an die zu identifizierende Person oder an eine der zu identifizierenden Person zugeordneten Identifikationsvorrichtung aussenden. Die zu identifizierende Person kann daraufhin, beispielsweise mittels der der zu identifizierenden Person zugeordneten Identifikationsvorrichtung, das biometrische Merkmal sowie den Transformationsschlüssel an die Kommunikationsschnittstelle 105 des Identifikationsservers 100 über das Kommunikationsnetzwerk übermitteln. Der Prozessor 103 kann anschließend das empfangene biometrische Merkmal mittels der Transformationsvorschrift und des empfangenen Transformationsschlüssels in das transformierte biometrische Merkmal transformieren.

Gemäß einer Ausführungsform sind das transformierte biometrische Referenzmerkmal und das transformierte biometrische Merkmal der zu identifizierenden Person unterschiedlich.

Gemäß einer weiteren Ausführungsform sind das transformierte biometrische Merkmal und das nichttransformierte biometrische Merkmal der zu identifizierenden Person unterschiedlich.

Gemäß einer weiteren Ausführungsform sind das transformierte biometrische Referenzmerkmal und das nichttransformierte biometrische Referenzmerkmal der zu identifizierenden Person unterschiedlich.

Gemäß einer weiteren Ausführungsform, welche nicht erfindungsgemäß ist und lediglich der Veranschaulichung dient, ist der Prozessor 103 ferner ausgebildet, das erzeugte transformierte biometrische Merkmal mit dem transformierten biometrischen Referenzmerkmal zu vergleichen, um die zu identifizierenden Person zu identifizieren.

Der Prozessor 103 kann ferner ausgebildet sein, basierend auf dem Vergleich des transformierten biometrischen Merkmals mit dem transformierten biometrischen Referenzmerkmals ein Vergleichsmaß zu bestimmen. Erreicht oder überschreitet das Vergleichsmaß einen vorbestimmten Schwellwert, so kann die zu identifizierende Person als die Person identifiziert werden, der das transformierte biometrische Referenzmerkmal zugeordnet ist. Ferner kann der Identifikationsserver 100 ausgebildet sein, ein Ergebnis des Vergleichs an den Dienstserver, beispielsweise mittels der Kommunikationsschnittstelle 105 über das Kommunikationsnetzwerk, zu übermitteln. Beispielsweise bestätigt der Identifikationsserver 100 dem Dienstserver die Identität der zu identifizierenden Person. Um eine zukünftige Identifikation der zu identifizierenden Person zu verhindern, kann die zu identifizierende Person den Transformationsschlüssel, beispielsweise aus einem Speicher der der zu identifizierenden Person zugeordneten Identifikationsvorrichtung, löschen oder überschreiben. Ferner kann die zu identifizierende Person die Herausgabe des Transformationsschlüssels verweigern, um eine zukünftige Identifikation der zu identifizierenden Person zu verhindern. Hierdurch kann eine Revozierung des transformierten biometrischen Referenzmerkmals erreicht werden. Erfindungsgemäß ist die Kommunikationsschnittstelle 105 ferner ausgebildet, das erzeugte transformierte biometrische Merkmal über das Kommunikationsnetzwerk an einen Dienstserver eines Dienstanbieters für einen Vergleich des transformierten biometrischen Merkmals mit dem transformierten biometrischen Referenzmerkmal auszusenden.

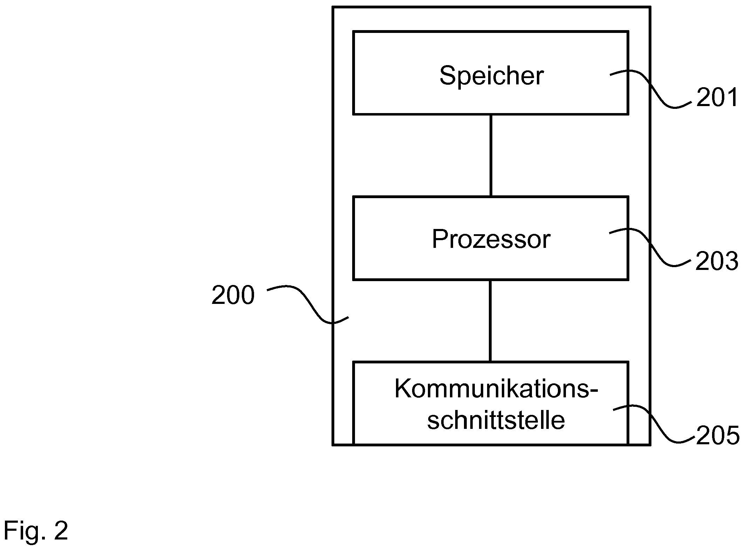

Fig. 2 zeigt eine schematische Darstellung einer nicht beanspruchten Identifikationsvorrichtung 200. Die Identifikationsvorrichtung 200 umfasst einen Speicher 201, einen Prozessor 203 und eine Kommunikationsschnittstelle 205, wobei der Prozessor 203 mit dem Speicher 201 und der Kommunikationsschnittstelle 205 verbunden ist.

Die Identifikationsvorrichtung 200 zur Identifizierung einer zu identifizierenden Person gegenüber einem Dienstanbieter unter Verwendung eines biometrischen Merkmals der zu identifizierenden Person, ist ausgebildet mit: der Kommunikationsschnittstelle 205, welche ausgebildet ist, einen Hinweis auf den Dienstanbieter zu empfangen; dem Speicher 201, welcher ausgebildet ist, eine Mehrzahl von Transformationsschlüsseln bereitzustellen, welche der zu identifizierenden Person und unterschiedlichen Dienstanbietern zugeordnet sind; und dem Prozessor 203, welcher ausgebildet ist, anhand des Hinweises auf den Dienstanbieter einen dem Dienstanbieter zugeordneten Transformationsschlüssel aus dem Speicher 201 auszulesen; wobei die Kommunikationsschnittstelle 205 ausgebildet ist, das biometrische Merkmal und den ausgelesenen Transformationsschlüssel auszugeben.

Die Identifikationsvorrichtung 200 kann ein Computer, ein Terminal, ein Kommunikationsgerät, ein Telefon, insbesondere ein Mobiltelefon oder ein Smartphone, oder ein Identifikationsdokument mit einem elektronischen Chip sein, wobei der elektronische Chip die Kommunikationsschnittstelle 205, den Speicher 201 und den Prozessor 203 implementiert. Ferner kann die Identifikationsvorrichtung 200 zur Kommunikation mit dem Identifikationsserver 100 ausgebildet sein, um die zu identifizierende Person zu identifizieren.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Kommunikationsschnittstelle 205 kann eine Local Area Network (LAN) Kommunikationsschnittstelle, eine Wireless Local Area Network (W-LAN) Kommunikationsschnittstelle, eine Nahfeldkommunikationsschnittstelle, eine Radiofrequenzidentifikations-Kommunikationsschnittstelle und/oder eine Mobilfunkschnittstelle umfassen. Ferner kann die Kommunikationsschnittstelle 205 zur verschlüsselten Kommunikation gemäß dem Standard Secure Sockets Layer / Transport Layer Security (SSL/TLS) ausgebildet sein. Die Kommunikationsschnittstelle 205 kann ferner zur digitalen Signierung von zu übermittelnden Daten ausgebildet sein.

Das biometrische Merkmal der zu identifizierenden Person kann ein Fingerabdruck, ein Handvenenmuster, ein Stimmmuster, ein Gesichtsbild oder eine Irisabbild eines Auges der zu identifizierenden Person sein. Ferner kann der Transformationsschlüssel ein der zu identifizierenden Person zugeordnetes Datum, ein einem Dienstanbieter zugeordnetes Datum, ein Passwort, einen kryptographischen Schlüssel, einen kryptographischen Signaturschlüssel und/oder ein digitales Zertifikat umfassen.

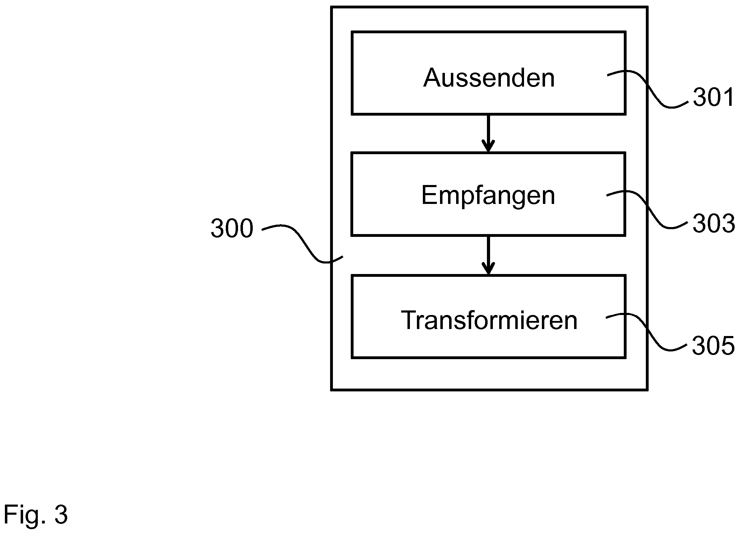

Fig. 3 zeigt eine schematische Darstellung eines Verfahrens 300 zur Identifikation einer zu identifizierenden Person mittels des Identifikationsservers 100. Das Verfahren 300 umfasst die Verfahrensschritte 301 bis 305.

Das Verfahren 300 zur Identifikation einer zu identifizierenden Person auf der Basis eines transformierten biometrischen Referenzmerkmals, welches der zu identifizierenden Person zugeordnet ist, mittels des Identifikationsservers 100 umfasst die Verfahrensschritte: Aussenden 301 einer Aufforderung zur Übermittlung eines biometrischen Merkmals der zu identifizierenden Person sowie eines Transformationsschlüssels über das Kommunikationsnetzwerk durch den Identifikationsserver 100; Empfangen 303 des biometrischen Merkmals der zu identifizierenden Person sowie des Transformationsschlüssels über das Kommunikationsnetzwerk durch den Identifikationsserver 100; und Transformieren 305 des empfangenen biometrischen Merkmals der zu identifizierenden Person mittels der Transformationsvorschrift und des empfangenen Transformationsschlüssels in ein transformiertes biometrisches Merkmal für eine Identifikation auf der Basis des transformierten biometrischen Referenzmerkmals durch den Identifikationsserver 100.

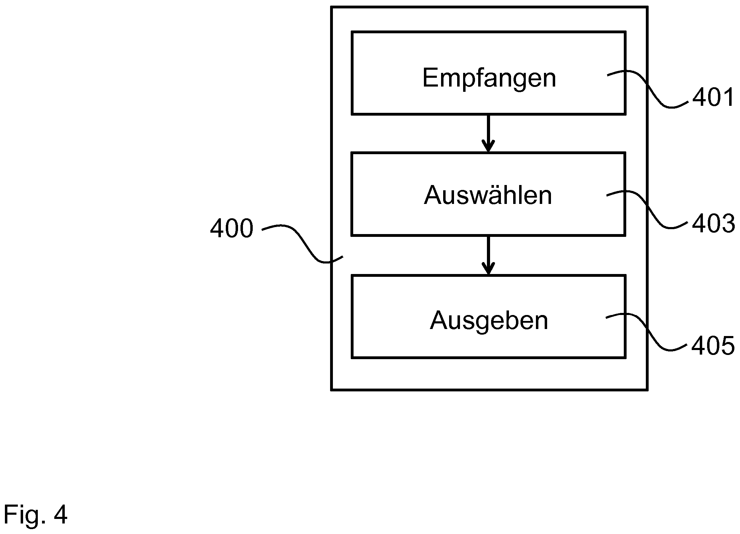

Fig. 4 zeigt eine schematische Darstellung eines nicht beanspruchten Verfahrens 400 zur Identifizierung einer zu identifizierenden Person mittels der Identifikationsvorrichtung 200. Das Verfahren 400 umfasst die Verfahrensschritte 401 bis 405.

Das Verfahren 400 zur Identifizierung einer zu identifizierenden Person gegenüber einem Dienstanbieter unter Verwendung eines biometrischen Merkmals der zu identifizierenden Person mittels der Identifikationsvorrichtung 200 umfasst die Verfahrensschritte: Empfangen 401 eines Hinweises auf den Dienstanbieter durch die Identifikationsvorrichtung 200; Auswählen 403 eines dem Dienstanbieter zugeordneten Transformationsschlüssels anhand des Hinweises auf den Dienstanbieter durch die Identifikationsvorrichtung 200; und Ausgeben 405 des biometrischen Merkmals und des ausgewählten Transformationsschlüssels durch die Identifikationsvorrichtung 200. Gemäß einer Ausführungsform kann eine Identifizierung mittels des Identifikationsservers 100 für die zu identifizierende Person mit einem Komfortgewinn verbunden sein.

Gemäß einer weiteren Ausführungsform kann mittels des Identifikationsservers 100 eine Identifikationsaufgabe im Internet, per Telefon oder an einer Eingangstür bequem und einfach gelöst werden.

Gemäß einer weiteren Ausführungsform kann zum Zeitpunkt der Beantragung eines Identifikationsdokumentes, wie eines Passes oder eines Personalausweises, die zu identifizierende Person, wie ein Bürger, in einer vertrauenswürdigen Umgebung präsent sein, ihre Identität geprüft werden und von ihr biometrische Referenzmerkmale, wie Fingerabdruck oder Gesichtsbild, erhoben werden.

Gemäß einer weiteren Ausführungsform können mittels des Identifikationsservers 100 biometrische Identitätsprüfungen, beispielsweise zur Identifikation der zu identifizierenden Person, für vielfältige nicht-hoheitliche oder hoheitliche Zwecke durchgeführt werden. Hierbei können einmal enrollte biometrische Referenzmerkmale, wie biometrische Daten, leicht erneuert oder zurückgezogen werden. Ferner kann eine Profilbildung erschwert oder verhindert werden. Diese biometrischen Identitätsprüfungen können mit verschieden funktionsstarken Verfahren in verschieden betraubaren Umgebungen durchgeführt werden. Hierbei kann ein Fingerabdruck an einem nicht als fälschungssicher bekannten Sensor zu einer anderen Zuverlässigkeit der Identitätsvermutung führen als eine Iriserkennung in einer zertifizierten Umgebung. Daher können verschiedene Vertrauensstufen verwendet werden, anhand derer eine Anwendung auswählen kann, ob die erreichte Sicherheit für ihre Zwecke ausreichend ist. Der Kauf einer S-Bahn-Fahrkarte wird hierbei nicht denselben Anforderungen unterliegen wie eine Banküberweisung über tausende Euro.

Gemäß einer weiteren Ausführungsform führt der Identifikationsserver 100 Authentifizierungen oder Identifikationen durch, jedoch führt der Identifikationsserver 100 keine Autorisierungen durch. Hierbei obliegt dies der fachlichen Anwendung, wie dem Dienstserver des Dienstanbieters, die diese Authentifizierung anfordert. Eine Anwendung fordert nur dann eine Authentifizierung oder Identifikation der zu identifizierenden Person an, wenn diese Person die erforderlichen biometrischen Daten oder Merkmale für genau diese Anwendung freigegeben hat. Hierbei kann bei Nichtvorliegen dieser Freigabe eine unautorisierte Prüfung verhindert werden. Auf diese Weise kann die zu identifizierende Person festlegen, für welche Anwendungen oder Gruppen von Anwendungen welche biometrischen Authentifikationen durchgeführt werden und welche Transaktionen, beispielsweise Volumen oder Art, basierend auf der erfolgten Authentifizierung oder Identifikation durchgeführt werden. Ferner kann ein entsprechend konditioniertes transformiertes biometrisches Refernenzmerkmal revoziert werden.

Gemäß einer weiteren Ausführungsform kann bei Verwendung eines Template Protection Verfahrens als Transformationsvorschrift erreicht werden, dass biometrische Referenzmerkmale so geschützt werden, dass ohne Zugabe des Transformationsschlüssels, wie eines weiteren Datums, kein erfolgreicher Vergleich mit erfassten biometrischen Merkmalen, wie Livedaten, möglich ist. Dieser Transformationsschlüssel kann von der zu identifizierenden Person, wie einem Merkmalsträger, so gewählt werden, dass für einen anderen Verwendungszweck, beispielsweise einen anderen Shop oder eine andere Bank, jeweils ein anderer Transformationsschlüssel verwendet wird. Dieser Transformationsschlüssel ist nicht auf dem Identifikationsserver 100 hinterlegt. Ein systematisches Profiling und eine Verknüpfung von Identitäten durch Auftraggeber der Authentifizierung, wie Shops oder Banken, mit anderen Auftraggebern kann demzufolge mit den auf dem Identifikationsserver 100 hinterlegten transformierten biometrischem Referenzmerkmalen, wie Referenzdaten, nicht oder nur eingeschränkt durchgeführt werden. Hierbei kann die zu identifizierende Person ferner die verschiedenen Transformationsschlüssel anwendungsspezifisch wählen. Das könnten etwa Kontonummern oder Kundennummern sein, aber auch spezifisch ausgewählte Zertifikate. Möglich ist auch das Vorhalten dieser Transformationsschlüssel ebenfalls auf dem Identifikationsserver 100, wobei die Transformationsschlüssel verschlüsselt abgelegt sind und der Zugriffsschlüssel sich im Besitz der zu identifizierenden Person befindet und nicht auf dem Identifikationsserver 100 vorliegt. Beispielsweise könnte sich dieser Zugriffsschlüssel auf einer Smartcard oder einem Personalausweis befinden. Für verschiedene Auftraggeber kann die zu identifizierende Person verschiedene Transformationsschlüssel wählen. Sie kann aber bei Bedarf auch Gruppen von Auftraggebern den gleichen Transformationsschlüssel zuordnen. Möchte die zu identifizierende Person für einen neuen Anwendungsfall oder einen neuen Auftraggeber neue transformierte biometrische Referenzmerkmale erzeugen, können diese aus nichttransformierten biometrischen Referenzmerkmalen erzeugt werden. Hierbei liegen diese für den Identifikationsserver 100 nicht zugreifbar vor. Erst bei Bedarf werden unter Benutzung eines im Zugriff der zu identifizierenden Person befindlichen Schlüssels die auf dem Identifikationsserver oder einer Smartcard befindlichen verschlüsselten biometrischen Referenzmerkmale entschlüsselt und in ein neues transformiertes biometrisches Referenzmerkmal, wie ein geschütztes Template, überführt.

Gemäß einer weiteren Ausführungsform können die nichttransformierten biometrischen Referenzmerkmale der zu identifizierbaren Person in einer betraubaren Umgebung erfasst werden. Das kann etwa das Passamt in einem Bürgerbüro sein. Die verwendeten Modalitäten können hierbei vielgestaltig sein. Für heutige Anwendungen bieten sich Finger, Sprache, Gesicht, Iris und womöglich Handvene als nichttransformierte biometrische Referenzmerkmale an. Die erfassten nichttransformierten biometrischen Referenzmerkmale können verschlüsselt abgelegt werden, der Schlüssel kann sich in der Obhut der zu identifizierenden Person befinden, beispielsweise auf einem Personalausweis. Zweckdienlich kann zu diesem Zeitpunkt auch eine gewisse Anzahl von transformierten biometrischen Referenzmerkmalen, wie geschützten Templates, erzeugt werden. Die transformierten biometrischen Referenzmerkmale, wie verschlüsselte Referenzdaten, können auf dem Identifikationsserver 100, wie einem Server eines Authentifikationsdienstleisters, oder auch auf einer Karte, wie einer Smartcard, der zu identifizierenden Person abgelegt werden.

Gemäß einer weiteren Ausführungsform kann die zu identifizierende Person zur Einbindung eines neuen Dienstanbieters, wie eines Shops, die Einbindung genehmigen und dem Dienstanbieter ein transformiertes biometrisches Referenzmerkmal, wie ein dediziertes geschütztes Template, zuweisen. Die Zuweisung kann in einem entsprechenden Eintrag in einer Datenbank bestehen oder auch in der Übergabe des diesem Dienstanbieter zugeordneten transformierten biometrischen Referenzmerkmals. Dem Dienstanbieter können ferner Credentials ausgehändigt werden, mit denen er seine Identität und sein Recht auf die vorzunehmende Identitätsprüfung der zu identifizierenden Person gegenüber dem Identifikationsserver 100 oder dem Authentifikationsdienstleister nachweisen kann.

Gemäß einer weiteren Ausführungsform kann zur Identifikation oder zur Prüfung der Identität der zu identifizierenden Person ein Dienstserver des Dienstanbieters gegenüber dem Identifikationsserver 100, wie einem Dienstleister, eine Identitätsprüfung begehren und seinen Anspruch darauf mittels der ihm überlassenen Credentials nachweisen. Der Identifikationsserver 100 benennt der zu identifizierenden Person den Dienstanbieter, wie einen Shop, und fordert von ihr die Übermittlung des passenden biometrischen Merkmals und des Transformationsschlüssels an. Der Prozessor 103 des Identifikationsservers 100 transformiert das empfangene biometrische Merkmal der zu identifizierenden Person mittels der Transformationsvorschrift und des empfangenen Transformationsschlüssels in ein transformiertes biometrisches Merkmal. Befinden sich das transformierte biometrische Referenzmerkmal, wie ein spezifisch geschütztes Referenztemplate, bei dem Identifikationsserver 100, kann der Prozessor 103 das erzeugte transformierte biometrische Merkmal mit dem transformierten biometrischen Referenzmerkmal vergleichen, um die zu identifizierenden Person zu identifizieren, was nicht erfindungsgemäß ist und lediglich der Veranschaulichung dient. Ferner kann der Identifikationsserver 100 das Ergebnis dem Dienstserver oder dem Dienstanbieter mitteilen. Befinden sich das transformierte biometrische Referenzmerkmal, wie ein geschütztes Referenztemplate, bei dem Dienstserver des Dienstanbieters, wie einem Shop, kann dem Dienstserver das aktuell erzeugte transformierte biometrische Merkmal, wie ein geschütztes Template, durch den Identifikationsserver 100 übermittelt werden und der Vergleich kann bei dem Dienstserver erfolgen. An beiden Orten kann der Vergleich nur durchgeführt werden, wenn die zueinander passenden Templates verwendet werden, wie das spezifische geschützte transformierte biometrische Referenzmerkmal und das mit dem Transformationsschlüssel erzeugte aktuelle geschützte transformierte biometrische Merkmal. Bringt die zu identifizierende Person den Transformationsschlüssel nicht bei, gibt es kein aktuelles transformiertes biometrisches Merkmal und der Vergleich wird immer fehlschlagen.

Gemäß einer weiteren Ausführungsform kann bei Verwendung von Template Protection als personifizierte Transformationsvorschrift die zu identifizierende Person die Authentifizierung für einen bestimmten Dienstanbieter stoppen, indem diese den betreffende dienstanbieterspezifischen Transformationsschlüssel vernichtet oder löscht. Damit können künftige Vergleiche nicht mehr durchgeführt werden. Zusätzlich können die betreffenden transformierten biometrischen Referenzmerkmale, wie geschützte Referenztemplates, aus dem Speicher 101 des Identifikationsservers 100 gelöscht werden. Hierdurch kann eine Revozierung der transformierten biometrischen Referenzmerkmale erreicht werden.

Gemäß einer weiteren Ausführungsform kann eine Zweckbindung der Authentifizierung oder der Identifikation erreicht werden. Bei der Erzeugung eines transformierten biometrischen Referenzmerkmals, wie eines spezifischen Templates, spätestens jedoch bei der Zuweisung zu einem bestimmten Dienstanbieter, wie einem Shop, oder einer Menge von Dienstanbieters, können dem eigentlichen Authentifikationsergebnis, wie einer Bestätigung der Identität der zu identifizierenden Person, Zusatzinformationen beigegeben werden, wie sie von gängigen digitalen Zertifikaten bekannt sind. Das können etwa sein: Zweckbindung für einen bestimmten Vertragspartner, zeitliche Geltungsdauer oder finanzielles Volumen.

Gemäß einer weiteren Ausführungsform kann das Verfahren 300 biometrisch sein, also mit einer Merkmalsbindung an die zu identifizierende Person arbeiten. Die erfassten transformierten biometrischen Referenzmerkmale können hierbei revoziert werden und von der zu identifizierenden Person einem dedizierten Einsatzzweck zugeordnet werden. Damit ist diese biometrische Vorgehensweise datenschutzfreundlich. Ferner kann eine Eingabe von Zugangsdaten oder Credentials durch die zu identifizierende Person in die Identifikationsvorrichtung 200 entfallen.

Gemäß einer weiteren Ausführungsform kann mittels des Verfahrens 300 eine revozierbare, von der zu identifizierenden Person kontrollierbare, Profilbildung verhindernde und mandantenfähige biometrische Authentifizierung erreicht werden.

Gemäß einer weiteren Ausführungsform können von der zu identifizierenden Person in einem Ausweisamt bei der Beantragung eines Personalausweises Fingerabdrücke und ein Gesichtsbild aufgenommen und diese verschlüsselt auf den Identifikationsserver 100, wie einen zentralen Server, abgelegt werden. Die Entschlüsselung kann anhand eines auf dem Personalausweis vorliegenden Datums durchgeführt werden und erfordert dessen Präsenz. Als Vorrat können bereits je zehn per Template Protection geschützte transformierte biometrische Referenzmerkmale angelegt werden. Ferner kann die zu identifizierende Person unter Benutzung ihres Personalausweises auf den Identifikationsserver 100 zugreifen und dort transformierte biometrische Referenzmerkmale anlegen, schützen, löschen, mit Namen versehen und zur Verwendung in konkreten Anwendungen zuordnen. Zum Anlegen ist jeweils die Präsenz des Personalausweises erforderlich. Ferner kann die zu identifizierende Person auf dem Identifikationsserver 100 festlegen, dass ein Dienstanbieter, wie eine Bank, ein transformiertes biometrisches Referenzmerkmal zur Identifikation oder zur Authentifizierung benutzen kann. Bei der Durchführung einer Transaktion, wie einer Überweisung, durch die zu identifizierende Person bei dem Dienstanbieter kann der Dienstanbieter bei dem Identifikationsserver 100 die Identifikation oder Authentifizierung der zu identifizierenden Person anfragen. Der Identifikationsserver 100 prüft die Berechtigung des Dienstanbieters dazu. Liegt diese vor fordert der Identifikationsserver 100 von der zu identifizierenden Person ein aktuelles biometrisches Merkmal und den Transformationsschlüssel an, führt einen biometrischen Datenvergleich durch und bestätigt gegenüber dem Dienstanbieter die Identität der zu identifizierenden Person.

### BEZUGSZEICHENLISTE

- 100: Identifikationsserver
- 101: Speicher
- 103: Prozessor
- 105: Kommunikationsschnittstelle

- 200: Identifikationsvorrichtung
- 201: Speicher
- 203: Prozessor
- 205: Kommunikationsschnittstelle

- 300: Verfahren
- 301: Aussenden
- 303: Empfangen
- 305: Transformieren

- 400: Verfahren
- 401: Empfangen
- 403: Auswählen
- 405: Ausgeben

## Patentansprüche

1. Identifikationsserver (100) zur Identifikation einer zu identifizierenden Person auf der Basis eines transformierten biometrischen Referenzmerkmals, welches der zu identifizierenden Person zugeordnet ist, mit:
einem Speicher (101), in welchem eine Transformationsvorschrift gespeichert ist;
einer Kommunikationsschnittstelle (105), welche ausgebildet ist, eine Aufforderung zur Übermittlung eines biometrischen Merkmals der zu identifizierenden Person sowie eines Transformationsschlüssels über das Kommunikationsnetzwerk auszusenden, und welche ausgebildet ist, das biometrische Merkmal der zu identifizierenden Person sowie den Transformationsschlüssel über das Kommunikationsnetzwerk zu empfangen; und
einem Prozessor (103), welcher ausgebildet ist, das empfangene biometrische Merkmal der zu identifizierenden Person mittels der Transformationsvorschrift und des empfangenen Transformationsschlüssels in ein transformiertes biometrisches Merkmal für eine Identifikation auf der Basis des transformierten biometrischen Referenzmerkmals zu transformieren,
wobei die Kommunikationsschnittstelle (105) ferner ausgebildet ist, das erzeugte transformierte biometrische Merkmal über das Kommunikationsnetzwerk an einen Dienstserver eines Dienstanbieters für einen Vergleich des transformierten biometrischen Merkmals mit dem transformierten biometrischen Referenzmerkmal auszusenden,
wobei die Kommunikationsschnittstelle (105) ferner ausgebildet ist, eine mittels des Dienstservers des Dienstanbieters übermittelte Personenkennung über das Kommunikationsnetzwerk zu empfangen, wobei die Personenkennung der zu identifizierenden Person zugeordnet ist, und wobei die Kommunikationsschnittstelle (105) ferner ausgebildet ist, ansprechend auf Empfangen der Personenkennung die Aufforderung zur Übermittlung eines biometrischen Merkmals der zu identifizierenden Person sowie eines Transformationsschlüssels über das Kommunikationsnetzwerk auszusenden.

2. Identifikationsserver (100) nach Anspruch 1, wobei die Transformationsvorschrift eine der folgenden Transformationsvorschriften ist: asymmetrische Verschlüsselung unter Verwendung eines kryptografischen Schlüssels, digitale Signierung unter Verwendung eines kryptographischen Signaturschlüssels, eine digitale Codierungsvorschrift, insbesondere ein digitaler Code, wie ein RS-Code oder ein Huffmann-Code, eine Scrambling-Vorschrift, eine digitale Modulationsvorschrift oder eine Template Protection Transformationsvorschrift.

3. Identifikationsserver (100) nach einem der vorangehenden Ansprüche, wobei der Transformationsschlüssel ein der zu identifizierenden Person zugeordnetes Datum, ein dem Dienstanbieter zugeordnetes Datum, ein Passwort, einen kryptographischen Schlüssel, einen kryptographischen Signaturschlüssel oder ein digitales Zertifikat umfasst.

4. Identifikationsserver (100) nach einem der vorangehenden Ansprüche, wobei die Kommunikationsschnittstelle (105) ferner ausgebildet ist, eine Dienstanbieterkennung über das Kommunikationsnetzwerk zu empfangen, wobei die Dienstanbieterkennung dem Dienstanbieter zugeordnet ist, wobei der Prozessor (103) ferner ausgebildet ist, auf der Basis der empfangenen Dienstanbieterkennung einen Hinweis auf den Dienstanbieter zu bestimmen, und wobei die Kommunikationsschnittstelle (105) ferner ausgebildet ist, den Hinweis auf den Dienstanbieter gemeinsam mit der Aufforderung zur Übermittlung eines biometrischen Merkmals der zu identifizierenden Person sowie eines Transformationsschlüssels über das Kommunikationsnetzwerk auszusenden.

5. Verfahren (300) zur Identifikation einer zu identifizierenden Person auf der Basis eines transformierten biometrischen Referenzmerkmals, welches der zu identifizierenden Person zugeordnet ist, mittels eines Identifikationsservers (100), mit:
Aussenden (301) einer Aufforderung zur Übermittlung eines biometrischen Merkmals der zu identifizierenden Person sowie eines Transformationsschlüssels über das Kommunikationsnetzwerk durch den Identifikationsserver (100);
Empfangen (303) des biometrischen Merkmals der zu identifizierenden Person sowie des Transformationsschlüssels über das Kommunikationsnetzwerk durch den Identifikationsserver (100);
Transformieren (305) des empfangenen biometrischen Merkmals der zu identifizierenden Person mittels einer Transformationsvorschrift und des empfangenen Transformationsschlüssels in ein transformiertes biometrisches Merkmal für eine Identifikation auf der Basis des transformierten biometrischen Referenzmerkmals durch den Identifikationsserver (100);und
Aussenden des erzeugten transformierten biometrischen Merkmals durch den Identifikationsserver (100) über das Kommunikationsnetzwerk an einen Dienstserver eines Dienstanbieters für einen Vergleich des transformierten biometrischen Merkmals mit dem transformierten biometrischen Referenzmerkmal,
Empfangen einer mittels des Dienstservers des Dienstanbieters übermittelte Personenkennung über das Kommunikationsnetzwerk durch den Identifikationsserver (100), wobei die Personenkennung der zu identifizierenden Person zugeordnet ist, und
ansprechend auf Empfangen der Personenkennung Aussenden der Aufforderung zur Übermittlung eines biometrischen Merkmals der zu identifizierenden Person sowie eines Transformationsschlüssels über das Kommunikationsnetzwerk durch den Identifikationsserver (100).

6. Verfahren (300) nach Anspruch 5, mit:
Empfangen einer Dienstanbieterkennung über das Kommunikationsnetzwerk durch den Identifikationsserver (100), wobei die Dienstanbieterkennung einem Dienstanbieter zugeordnet ist;
Bestimmen eines Hinweises auf den Dienstanbieter auf der Basis der empfangenen Dienstanbieterkennung durch den Identifikationsserver (100); und
gemeinsames Aussenden des Hinweises auf den Dienstanbieter mit der Aufforderung zur Übermittlung eines biometrischen Merkmals der zu identifizierenden Person sowie eines Transformationsschlüssels über das Kommunikationsnetzwerk durch den Identifikationsserver (100).

## Claims

1. An identification server (100) for identifying a person to be identified on the basis of a transformed biometric reference feature which is assigned to the person to be identified, the identification server (100) comprising:
a memory (101) in which a transformation rule is stored;
a communication interface (105) which is configured to send out a request for transmission of a biometric feature of the person to be identified as well as a transformation key via the communication network, and which is configured to receive the biometric feature of the person to be identified as well as the transformation key via the communication network; and
a processor (103) which is configured to transform the received biometric feature of the person to be identified by the transformation rule and the received transformation key into a transformed biometric feature for an identification on the basis of the transformed biometric reference feature,
wherein the communication interface (105) is further configured to send out the generated transformed biometric feature via the communication network to a service server of a service provider for a comparison of the transformed biometric feature with the transformed biometric reference feature,
wherein the communication interface (105) is further configured to receive a person identifier transmitted by the service server of the service provider via the communication network, wherein the person identifier is assigned to the person to be identified, and
wherein the communication interface (105) is further configured to send out the request for transmission of a biometric feature of the person to be identified as well as a transformation key via the communication network in response to receiving the person identifier.

2. The identification server (100) according to claim 1, wherein the transformation rule is one of the following transformation rules: asymmetric encryption using a cryptographic key, digital signing using a cryptographic signature key, a digital coding rule, in particular a digital code such as an RS code or a Huffmann code, a scrambling rule, a digital modulation rule or a template protection transformation rule.

3. The identification server (100) according to one of the preceding claims, wherein the transformation key comprises a date assigned to the person to be identified, a date assigned to the service provider, a password, a cryptographic key, a cryptographic signature key or a digital certificate.

4. The identification server (100) according to one of the preceding claims, wherein the communication interface (105) is further configured to receive a service provider identifier via the communication network, wherein the service provider identifier is assigned to the service provider, wherein the processor (103) is further configured to determine an indication to the service provider based on the received service provider identification, and wherein the communication interface (105) is further configured to send out the indication to the service provider together with the request for transmission of a biometric feature of the person to be identified as well as a transformation key via the communication network.

5. A method (300) for identifying a person to be identified on the basis of a transformed biometric reference feature, which is assigned to the person to be identified, by an identification server (100), the method (300) comprising:
sending out (301) a request for transmission of a biometric feature of the person to be identified as well as a transformation key via the communication network by the identification server (100);
receiving (303) the biometric feature of the person to be identified as well as the transformation key via the communication network by the identification server (100);
transforming (305) the received biometric feature of the person to be identified by a transformation rule and the received transformation key into a transformed biometric feature for an identification on the basis of the transformed biometric reference feature by the identification server (100); and
sending out the generated transformed biometric feature by the identification server (100) via the communication network to a service server of a service provider for a comparison of the transformed biometric feature with the transformed biometric reference feature, receiving a person identifier transmitted by the service server of the service provider via the communication network by the identification server (100), wherein the person identifier is assigned to the person to be identified, and
sending out the request for transmission of a biometric feature of the person to be identified as well as a transformation key via the communication network by the identification server (100) in response to receiving the person identifier.

6. The method (300) according to claim 5, comprising:
receiving a service provider identifier via the communication network by the identification server (100), wherein the service provider identifier is assigned to a service provider;
determining an indication to the service provider on the basis of the received service provider identifier by the identification server (100); and
jointly sending out the indication to the service provider with the request for transmission of a biometric feature of the person to be identified as well as a transformation key via the communication network by the identification server (100).

## Revendications

1. Serveur d'identification (100) servant à l'identification d'une personne à identifier sur la base d'une caractéristique biométrique de référence transformée qui est associée à la personne à identifier, comprenant :
une mémoire (101) dans laquelle est stockée une règle de transformation ;
une interface de communication (105) qui est réalisée pour émettre une demande de transmission d'une caractéristique biométrique de la personne à identifier ainsi que d'une clé de transformation par le réseau de communication, et qui est réalisée pour recevoir la caractéristique biométrique de la personne à identifier ainsi que la clé de transformation par le réseau de communication ; et
un processeur (103) qui est réalisé pour transformer la caractéristique biométrique reçue de la personne à identifier au moyen de la règle de transformation et de la clé de transformation reçue en une caractéristique biométrique transformée pour une identification sur la base de la caractéristique biométrique de référence transformée,
l'interface de communication (105) étant en outre réalisée pour émettre la caractéristique biométrique transformée générée par le réseau de communication à un serveur de services d'un fournisseur de services pour une comparaison de la caractéristique biométrique transformée avec la caractéristique biométrique de référence transformée,
l'interface de communication (105) étant en outre réalisée pour recevoir par le réseau de communication un identifiant personnel transmis au moyen du serveur de services du fournisseur de services, l'identifiant personnel étant associé à la personne à identifier, et l'interface de communication (105) étant en outre réalisée, en réponse à la réception de l'identifiant personnel, pour émettre la demande de transmission d'une caractéristique biométrique de la personne à identifier ainsi que d'une clé de transformation par le réseau de communication.

2. Serveur d'identification (100) selon la revendication 1, dans lequel la règle de transformation est l'une des règles de transformation suivantes : un cryptage asymétrique utilisant une clé cryptographique, une signature numérique utilisant une clé de signature cryptographique, une règle de codage numérique, en particulier un code numérique, tel qu'un code RS ou un code de Huffmann, une règle de brouillage, une règle de modulation numérique ou une règle de transformation de protection de modèle.

3. Serveur d'identification (100) selon l'une quelconque des revendications précédentes, dans lequel la clé de transformation comprend une donnée associée à la personne à identifier, une donnée associée au fournisseur de services, un mot de passe, une clé cryptographique, une clé de signature cryptographique ou un certificat numérique.

4. Serveur d'identification (100) selon l'une quelconque des revendications précédentes, dans lequel l'interface de communication (105) est en outre réalisée pour recevoir un identifiant de fournisseur de services par le réseau de communication, l'identifiant de fournisseur de services étant associé au fournisseur de services, le processeur (103) étant en outre réalisé pour déterminer sur la base de l'identifiant de fournisseur de services reçu une indication concernant le fournisseur de services, et l'interface de communication (105) étant en outre réalisée pour émettre l'indication concernant le fournisseur de services conjointement avec la demande de transmission d'une caractéristique biométrique de la personne à identifier ainsi que d'une clé de transformation par le réseau de communication.

5. Procédé (300) servant à l'identification d'une personne à identifier sur la base d'une caractéristique biométrique de référence transformée qui est associée à la personne à identifier, au moyen d'un serveur d'identification (100), comprenant les étapes consistant à :
émettre (301) une demande de transmission d'une caractéristique biométrique de la personne à identifier ainsi que d'une clé de transformation par le réseau de communication par le serveur d'identification (100) ;
recevoir (303) la caractéristique biométrique de la personne à identifier ainsi que la clé de transformation par le réseau de communication par le serveur d'identification (100) ;
transformer (305) la caractéristique biométrique reçue de la personne à identifier au moyen d'une règle de transformation et de la clé de transformation reçue en une caractéristique biométrique transformée pour une identification sur la base de la caractéristique biométrique de référence transformée par le serveur d'identification (100) ; et
émettre la caractéristique biométrique transformée générée par le serveur d'identification (100) par le réseau de communication à un serveur de services d'un fournisseur de services pour une comparaison de la caractéristique biométrique transformée avec la caractéristique biométrique de référence transformée,
recevoir un identifiant personnel transmis au moyen du serveur de services du fournisseur de services par le réseau de communication par le serveur d'identification (100), l'identifiant personnel étant associé à la personne à identifier, et
en réponse à la réception de l'identifiant personnel, émettre la demande de transmission d'une caractéristique biométrique de la personne à identifier ainsi que d'une clé de transformation par le réseau de communication par le serveur d'identification (100).

6. Procédé (300) selon la revendication 5, comprenant les étapes consistant à :
recevoir un identifiant de fournisseur de services par le réseau de communication par le serveur d'identification (100), l'identifiant de fournisseur de services étant associé à un fournisseur de services ;
déterminer par le serveur d'identification (100) une indication concernant le fournisseur de services sur la base de l'identifiant de fournisseur de services reçu ; et
émettre conjointement l'indication concernant le fournisseur de services avec la demande de transmission d'une caractéristique biométrique de la personne à identifier ainsi que d'une clé de transformation par le réseau de communication par le serveur d'identification (100) .
